# EUROPEAN PATENT APPLICATION

(11) **EP 4 129 063 A1**
(43) Date of publication of application: **08.02.2023**
(21) Application number: 22188390.3
(22) Date of filing: 02.08.2022
(51) Int. Cl.: A01N 3/02, A01P 3/00, A01N 43/647

(54) **METHOD FOR EXTENDING VASE LIFE OF CUT FLOWERS**

(30) Priority: 05.08.2021 KR 20210103458
(71) Applicant: Korea Atomic Energy Research Institute, Daejeon 34057 (KR)
(72) Inventor: PARK, Hae Jun, 56188 Jeongeup-si, Jeollabuk-do (KR); LEE, Myun Joo, 56212 Jeongeup-si, Jeollabuk-do (KR); KANG, Phil Hyun, 34121 Yuseong-gu, Daejeon (KR)
(74) Representative: Cabinet Beau de Loménie

(57) **Abstract**

The present disclosure relates to a method for extending vase life of cut flowers, comprising watering up by immersing cut flowers in an aqueous solution of sodium dichloroisocyanurate and then exposing the cut flowers to radiation.

## Description

### Field of the Invention

The present disclosure relates to a method for extending vase life of cut flowers.

### Description of the Related Art

Cut flowers are flowers or flower buds that have been cut from a plant together with stems and leaves thereof, and they are used for decoration or ornamental purposes. Since cut flowers have a very short aging period compared to other flowering plants, it is very important to extend the vase life of cut flowers.

In general, the method of extending the vase life of cut flowers after harvest may be speculated in terms of a pre-treatment (in which the cut flowers are treated with a chemical substance immediately after harvest) and a posttreatment (in which the consumer properly dilutes the chemical substance in the solution within a vase). Additionally, in terms of the distribution process of cut flowers, there are wet distribution and dry distribution; however, since wet distribution requires a high cost, most producers distribute cut flowers after directly performing a pre-treatment of cut flowers with a chemical substance after harvesting flowering plants so as to extend their vase life during the distribution process.

Currently, it is estimated that the loss caused in the process of storage and distribution after harvest of flowering plants in Korea is about 30-40% of the total production. Although the export potential of domestic flowers is gradually increasing, technology development for long-term storage and export is lagging behind, resulting in weakening of international competitiveness. Therefore, there is a demand on the development of continuous and systematic technology so as to maintain freshness and improve quality during distribution of cut flowers.

### [Prior Art Document]

### [Patent Document]

(Patent Document 1) KR Patent Application Publication No. 2017-0140711 (December 21, 2017)

### TECHNICAL PROBLEM

An aspect of the present disclosure provides a method for extending vase life of cut flowers so as to maintain freshness even during dry distribution of flowering plants.

Another aspect of the present disclosure provides a method for producing cut flowers with extended vase life.

### TECHNICAL SOLUTION

In order to solve the problems described above, an aspect of the present disclosure provides a method for extending vase life of cut flowers, which includes watering up by immersing cut flowers in an aqueous solution of sodium dichloroisocyanurate (NaDCC) and then exposing the cut flowers to radiation.

Another aspect of the present disclosure provides a method for preparing cut flowers with extended vase life, which includes watering up by immersing cut flowers in an aqueous solution of sodium dichloroisocyanurate (NaDCC) and then exposing the cut flowers to radiation.

### ADVANTAGEOUS EFFECTS OF THE INVENTION

According to the present disclosure, the cut flowers, which were exposed to radiation after watering up with an aqueous solution of NaDCC, can have the effect of significantly improving the survival rate compared to those which were treated with NaDCC or radiation alone, or subjected to spray treatment with an aqueous solution of NaDCC.

Additionally, as for the cut flowers with extended vase life according to the present disclosure, flowering is delayed for 36 hours or longer and the vase life is extended for three or more days. Therefore, it is expected that the loss that may occur during the process of storage and distribution of cut flowers can be reduced, and as a result, may contribute to the diversification of exporting countries.

### BRIEF DESCRIPTION OF THE DRAWINGS

FIG. 1 shows a graph illustrating the effect on the extension of vase life of cut roses according to the concentration of an aqueous solution of NaDCC expressed as a survival rate (%).
FIG. 2 shows a graph illustrating the effect on the extension of vase life of cut roses according to radiation treatment and the concentration of an aqueous solution of NaDCC expressed as a survival rate (%).
FIG. 3 shows an image and a graph illustrating the effect on the extension of vase life of cut roses according to the treatment method of an aqueous solution of NaDCC (in which A represents a group in which watering up was performed by treating with purified water; B represents a group in which watering up was performed by treating with 70 ppm NaDCC; and C represents a group which was sprayed with 70 ppm NaDCC).
FIG. 4 shows a graph illustrating the effect on the extension of vase life of cut roses when treated with NaDCC, electron beams, or a co-treatment thereof expressed as a survival rate (%).
FIG. 5 shows an image illustrating the effect on the extension of vase life of cut roses when treated with NaDCC, electron beams, or a co-treatment thereof (in which 5A represents a group in which watering up was performed by treating with purified water; 5B represents a group in which watering up was performed with NaDCC; 5C represents a group in which watering up was performed with NaDCC and which was exposed to radiation at a dose of 200Gy; and 5D represents a group which was exposed to electron beams at a dose of 200Gy).

### DETAILED DESCRIPTION OF THE PREFERRED EMBODIMENT

The present disclosure will be described in detail below.

In an aspect, the present disclosure provides a method for extending vase life of cut flowers.

The method for extending the vase life of cut flowers of the present disclosure includes watering up by immersing cut flowers in an aqueous solution of NaDCC (sodium dichloroisocyanurate) and then exposing the cut flowers to radiation.

The term "cut flowers" refers to flowers or flower buds that have been cut from a plant together with stems and leaves thereof, and as used herein, the cut flowers may include any flowering plants without limitation as long as its period from maturity to aging is short, for example, roses, lilies, chrysanthemums, etc.

The term "watering up" generally refers to circulating water through the body of cut flowers by immersing the cut flowers in purified water at a certain level so as to maintain the vase life of a flowering plant, which is in a cut state, and in the present disclosure, watering up may be used as a meaning including immersion of cut flowers in an aqueous solution of NaDCC instead of water.

The aqueous solution of NaDCC is used as an agent for treating watering up and the vase life of cut flowers can be extended using the same. In particular, the concentration of the aqueous solution of NaDCC may be in a range of 10 ppm to 200 ppm, and specifically 10 ppm to 150 ppm, 10 ppm to 100 ppm, 10 ppm to 80 ppm, 20 ppm to 100 ppm, 20 ppm to 80 ppm, 20 ppm to 70 ppm, 30 ppm to 100 ppm, 30 ppm to 80 ppm, 50 ppm to 100 ppm, 50 ppm to 80 ppm, or 50 ppm to 70 ppm.

The immersion can be performed for a period of time normally required for an aqueous solution of NaDCC to circulate within the body of cut flowers, and specifically, it may proceed for 1 hour to 10 hours, 2 hours to 8 hours, or 3 hours to 8 hours, but is not limited thereto.

The radiation may be any type of radiation (e.g., electron beams, X-rays, and gamma rays) that can delay the flowering of cut flowers or extend the vase life.

The radiation may be exposed at a radiation dose of 100 Gy to 300 Gy (Gray, 1 Gy being equal to 1 m².s⁻²), a radiation dose of 100 Gy to 250 Gy, and a radiation dose of 100 Gy to 200 Gy. When the radiation is exposed in the radiation dose range described above, the overall vase life of the cut flowers can be further extended.

The method of extending the vase life of cut flowers of the present disclosure may further include storing the watered cut flowers at room temperature or refrigeration.

In particular, the watered cut flowers may be stored at room temperature or refrigeration for a predetermined period of time. The predetermined period of time may be 2 to 36 hours, and specifically 5 to 36 hours, 5 to 24 hours, 5 to 20 hours, 8 to 36 hours, 8 to 24 hours, 8 to 20 hours, 10 to 36 hours, 10 to 24 hours, or 10 to 20 hours, but is not limited thereto.

The storage at refrigeration may be performed at 1°C to 10°C, and specifically 2°C to 10°C, 3°C to 10°C, or 4°C to 10°C, but is not limited thereto.

Through storing of the watered cut flowers under the above-described temperature conditions for the above-described time, the flower shape can be well maintained at the time of flowering and the effect of extending the vase life of the cut flowers can be further improved.

Through the method of extending the vase life of the present disclosure, flowering can be delayed for more than 36 hours compared to the related art in which purified water used to be merely watered to cut flowers, thereby extending the vase life of cut flowers.

In another aspect, the present disclosure includes immersing cut flowers in an aqueous solution of sodium dichloroisocyanurate (NaDCC) and then exposing the cut flowers to radiation.

The method for preparing cut flowers with extended vase life of the present disclosure may further include storing the watered cut flowers at room temperature or refrigeration for a predetermined period of time.

The aqueous solution of NaDCC, immersion, predetermined period of time, and storage at refrigeration are as described above.

The present disclosure will be described in detail by Examples and Experimental Examples. However, the following Examples and Experimental Examples are only for illustrating the present disclosure, and the content of the present disclosure is not limited by the Examples and Experimental Examples described below.

### [Example 1]

Effect of treatment at various concentrations of aqueous solution of NaDCC on extension of vase life of cut roses.

After treating cut roses with an aqueous solution of NaDCC at various concentrations, the effect of extending the vase life of cut roses according to the concentration was compared.

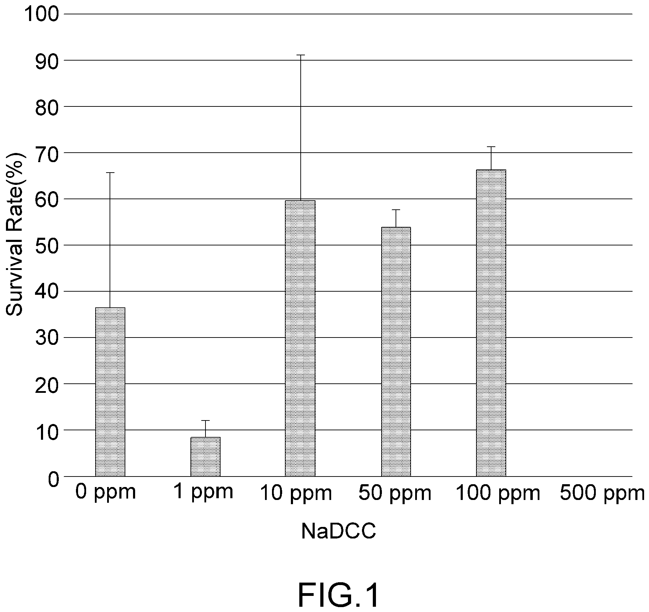

Specifically, the aqueous solution of NaDCC was prepared at various concentrations NaDCC by treating NaDCC in purified water to concentrations of 0 ppm, 1 ppm, 10 ppm, 50 ppm, 100 ppm, and 500 ppm. The experimental groups were divided so that each experimental group could have 20 cut roses of Autumn Party variety, which have weaker viability compared to other varieties. The cut roses were watered up by immersing in 1 L of the aqueous solution of NaDCC at various concentrations for 6 hours. Upon completion of watering up, the watered cut roses were separately put into a vase containing 500 mL of purified water, and in particular, the cut flowers were freshly cut at the bottom before setting in the vase. After storing at room temperature for 5 days, the changes in the cut roses were observed. The cut roses that had their necks bent and those whose petals withered or fell were excluded in counting the number of survived ones, and the survival rate was calculated from the ratio of the number of survived ones to the number of individuals and the results are shown in FIG. 1.

As a result, as shown in FIG. 1, it was confirmed that the survival rate of the cut roses, which were watered up by immersing in 10 ppm to 100 ppm of an aqueous solution of NaDCC, was significantly improved compared to that of the cut roses immersed in 1 ppm or 500 ppm of the aqueous solution of NaDCC and that of untreated cut roses.

### [Example 2]

Effect of co-treatment with radiation and treatment at various concentrations of aqueous solution of NaDCC on extension of vase life of cut roses.

After treating cut roses with an aqueous solution of NaDCC at various concentrations followed by radiation treatment, the effect of extending the vase life of cut roses according to the concentration was compared.

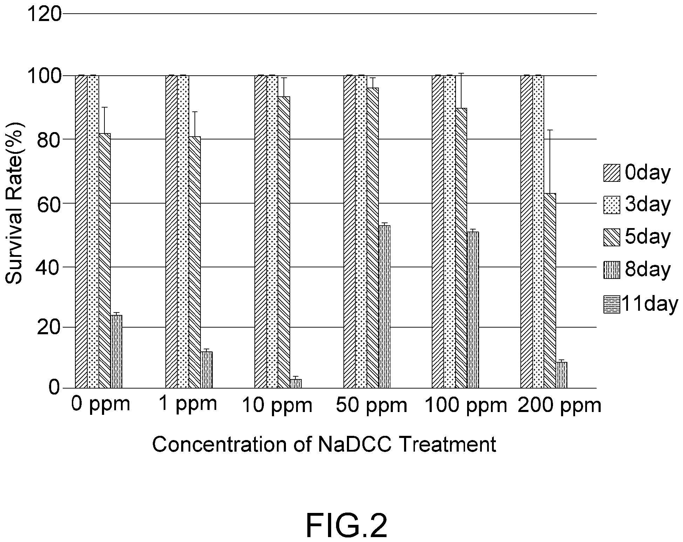

Specifically, the aqueous solution of NaDCC was prepared at various concentrations NaDCC by treating NaDCC in purified water to concentrations of 0 ppm, 1 ppm, 10 ppm, 50 ppm, 100 ppm, and 500 ppm. The experimental groups were divided so that each experimental group could have 20 cut roses of Narsha variety. The cut roses were watered up by immersing in 1 L of the aqueous solution of NaDCC at various concentrations for 6 hours and then exposed to 0.15 mA electron beams at a dose of 200 Gy. The radiation-exposed cut roses were separately put into a vase containing 500 mL of purified water, and in particular, the cut flowers were freshly cut at the bottom before setting in the vase. The changes in the cut roses were observed at room temperature for 11 days. The cut roses that had their necks bent and those whose petals withered or fell were excluded in counting the number of survived ones, and the survival rate was calculated from the ratio of the number of survived ones to the number of individuals and the results are shown in FIG. 2.

As a result, as shown in FIG. 2, it was confirmed that there was no difference in the survival rate in all groups until after the initial 3 days passed; however, after 8 days, the effect of extending the vase life of cut roses immersed in 50 ppm and 100 ppm of an aqueous solution of NaDCC was significantly increased compared to other groups.

### [Example 3]

Effect of various treatment methods with aqueous solution of NaDCC on extension of vase life of cut roses.

After spraying an aqueous solution of NaDCC to cut roses or treating cut roses with radiation after watering up, the effect of extending the vase life of cut roses was compared.

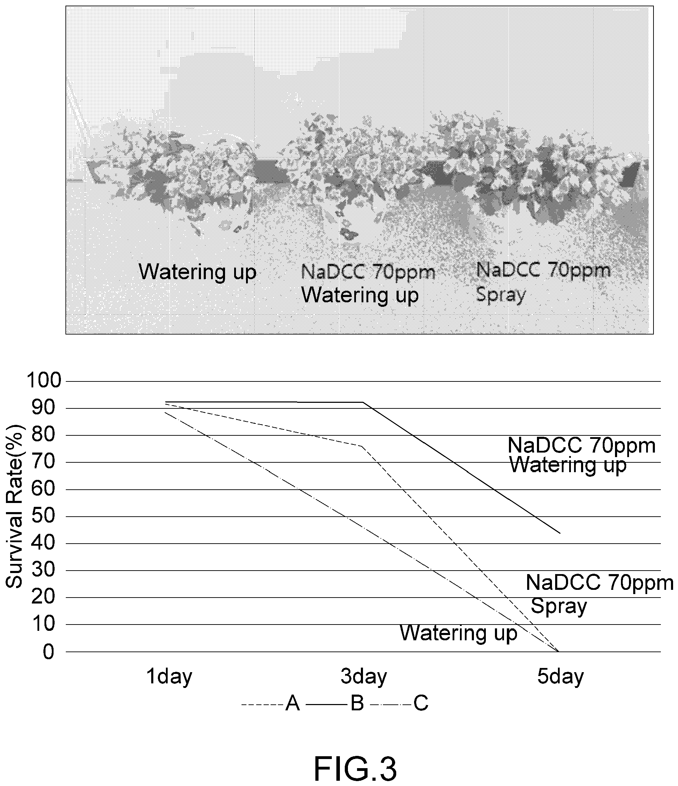

Specifically, for the control group (A) and the watered group (B), 20 cut roses of Narsha variety in each group were watered up by immersing in 1 L of purified water or an aqueous solution containing 70 ppm of NaDCC. For the spray group (C), 25 mL of an aqueous solution containing 70 ppm of NaDCC was evenly sprayed on 20 cut roses, and then watered up by immersing in purified water in the same manner as in the control group. The cut roses in each group were watered up for 6 hours, refrigerated by storing at 4°C, and after 18 hours, exposed to electron beams at a dose of 200 Gy. After the exposure to radiation, the cut roses were separated into a vase containing 1 L of purified water, stored at room temperature for 5 days, and the changes in the cut roses were observed. The cut roses that had their necks bent and those whose petals withered or fell were excluded in counting the number of survived ones, and the survival rate was calculated from the ratio of the number of survived ones to the number of individuals and the results are shown in FIG. 3.

As a result, as shown in FIG. 3, it was confirmed that the survival rate was increased by 45% or more in the group, which was treated by NaDCC-watering up, compared to the group, which was treated by NaDCC-spray.

### [Example 4]

Effect of co-treatment of aqueous solution of NaDCC and radiation on extension of vase life of cut roses.

After treating cut roses individually or in combination with an aqueous solution of NaDCC and radiation, the effect of extending the vase life of cut roses was compared.

Specifically, the cut roses of orange gold variety, which were divided into experimental groups by the unit of a bundle (10 roses), were watered with an aqueous solution containing 70 ppm of NaDCC, watered with an aqueous solution containing 70 ppm of NaDCC followed by exposure to electron beams at a dose of 200 Gy, or merely exposed to electron beams at a dose of 200 Gy, respectively, and then separated into a vase containing 500 mL of purified water, stored for 3 days under constant temperature and humidity (24°C and 60% humidity) conditions, and the changes in the cut roses were observed. The cut roses that had their necks bent and those whose petals withered or fell were excluded in counting the number of survived ones, and the survival rate was calculated from the ratio of the number of survived ones to the number of individuals and the results are shown in Table 1.

**[Table 1]**

| | Number of Survivors/Number of Individuals (Survival Rate %) | | | |
|---|---|---|---|---|
| | Untreated Control Group | NaDCC 70 ppm | 200 Gy 0.15 mA | NaDCC 70ppm 200 Gy 0.15 mA |
| 0 Day | 34L/34 (100%) | 34L/34 (100%) | 33L/33 (100%) | 32L/32 (100%) |
| 1 Day | 24L/34 (70.58%) | 34L/34 (100%) | 10L/33 (30.30%) | 32L/32 (100%) |
| 2 Days | 0L/34 (0%) | 29L/34 (85.29%) | 0L/33 (0%) | 32L/32 (100%) |
| 3 Days | 0L/34 (0%) | 2L/34 (5.88%) | 0L/33 (0%) | 22L/32 (68.75%) |

| | | | | |
|---|---|---|---|---|
| - L: Number of Survivors | | | | |

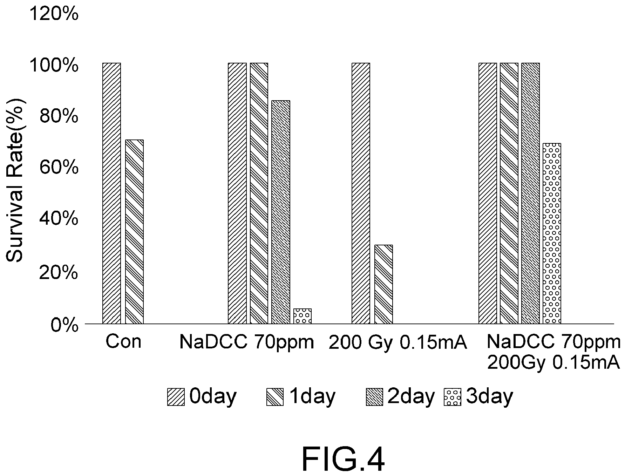

As a result, as shown in Table 1 and FIG. 4, it was confirmed that while the group treated only with radiation showed no cut roses survived after 2 days, and the group treated with NaDCC alone showed a survival rate of only 5.88% after 3 days, the group co-treated with NaDCC and radiation showed a survival rate of 68.75% even after 3 days.

From these results, it can be seen that when the aqueous solution of NaDCC and radiation were co-treated, the survival rate of cut flowers was significantly increased compared to the cases where either the aqueous solution of NaDCC or the radiation was treated alone.

### [Example 5]

Synergistic vase life extension effect of aqueous solution of NaDCC and radiation treatment according to simulated export refrigeration conditions.

The effect of extending the vase life of cut roses was compared after treating cut roses individually or in combination with an aqueous solution of NaDCC and radiation followed by refrigerated storage at 4°C for 4 days by simulating long-distance export.

Specifically, the cut roses were divided into a control group (A) and experimental groups (a group treated with watering up of NaDCC (B), a group co-treated with watering up and radiation (C), and a group treated with radiation (D)). Then, cut roses of Narsha variety, as a unit of 10 roses, were watered up by immersing in 1 L of purified water or an aqueous solution containing 70 ppm of NaDCC. Thereafter, cut roses of all groups were watered up by immersing in purified water in the same manner as in the control group. The cut roses in each group were watered up for 6 hours, stored at refrigeration at 4°C, and then exposed to electron beams at a dose of 200 Gy. After the exposure to radiation, the cut roses were separated and put into a vase containing 1 L of purified water, refrigerated at 4°C for 4 days assuming long-distance transport, left at room temperature for 24 hours, and then the changes in the cut roses were observed.

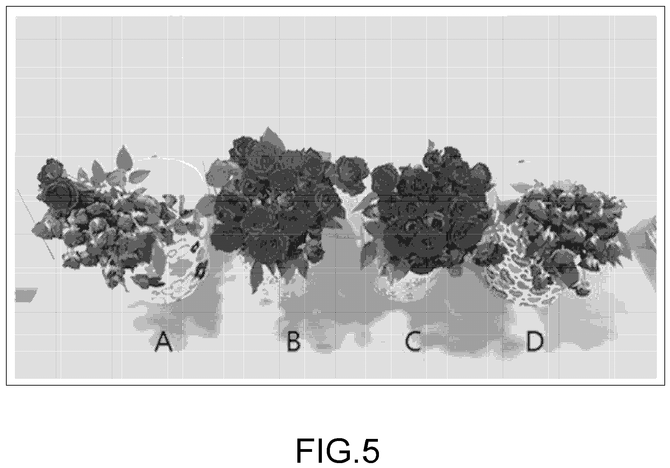

As a result, as shown in FIG. 5, it was shown that when the cut roses were left for 24 hours at room temperature after storage at 4°C for 4 days, only the group treated with watering up of NaDCC (B) and the group co-treated with watering up and radiation (C) survived, in which although the group treated with watering up of NaDCC (B) survived but aging was advanced compared to the co-treatment group (C).

### [Example 6]

Effect of treatment of watering up with aqueous solution of NaDCC on delay of flowering.

The effect of delaying the flowering of cut roses was compared after watering up of the cut roses with an aqueous solution of NaDCC; or after watering up with an aqueous solution of NaDCC followed by radiation treatment.

Specifically, the cut roses were divided into a control group (A) and experimental groups (a group treated with watering up of NaDCC (B), and a group co-treated with watering up and radiation (C)). Then, cut roses of Pink Yoyo variety in each group were watered up by immersing in 1 L of purified water or an aqueous solution containing 70 ppm of NaDCC. The cut roses in each group were watered up for 6 hours, stored at refrigeration at 4°C, and after 18 hours, the cut roses in the co-treatment group were exposed to electron beams at a dose of 200 Gy. After the exposure to radiation, the cut roses were separated and put into a vase containing 1 L of purified water, refrigerated for 4 days assuming long-distance transport, left at room temperature for 24 hours, and then the flowering rate was calculated from the ratio of the number of flowers to the number of individuals and the results are shown in Table 2 below. The experiment was repeated twice.

**[Table 2]**

| | After 2 Days | After 6 Days |
|---|---|---|
| | Number of Flowers/Number of Individuals (Flowering Rate %) | Number of Flowers/Number of Individuals (Flowering Rate %) |
| Purified Water (A) | 17/17 (100%) | 17/17 (100%) |
| | 11/17 (64.7%) | 15/17 (88.23%) |
| NaDCC 70 ppm (B) | 10/21 (47.61%) | 20/21 (95.24%) |
| | 12/21 (57.14%) | 16/21 (76.19%) |
| NaDCC 70 ppm 200 Gy 0.15 mA (C) | 8/23 (34.78%) | 16/23 (69.57%) |
| | 5/23 (21.74%) | 20/23 (86.96%) |

As a result, as shown in Table 2, it was found that flowering was delayed in the group which was treated with watering up of NaDCC, and in the co-treatment group, where radiation treatment was followed after watering up of NaDCC, the flowering rate was decreased more significantly.

## Claims

1. A method for extending vase life of cut flowers, comprising watering up by immersing cut flowers in an aqueous solution of sodium dichloroisocyanurate and then exposing the cut flowers to radiation.

2. The method of claim 1, wherein the concentration of the aqueous solution of sodium dichloroisocyanurate is 10 ppm to 200 ppm.

3. The method of claim 1 or 2, wherein the immersion is performed for 1 hour to 10 hours.

4. The method of any one of claims 1 to 3, wherein the radia tion exposure is at a dose of 100 Gy to 300 Gy.

5. The method of any one of claims 1 to 4, wherein the radiation is any one of electron beams, X-rays, and gamma rays.

6. The method of any one of claims 1 to 5, further comprising storing the watered cut flowers at room temperature or refrigeration for a predetermined period of time.

7. The method of claim 6, wherein the storage at refrigeration is performed at 1°C to 10°C.

8. The method of claim 6 or 7, wherein the predetermined period of time is for 2 hours to 36 hours.

9. A method for preparing cut flowers with extended vase life, comprising watering up by immersing cut flowers in an aqueous solution of sodium dichloroisocyanurate and then exposing the cut flowers to radiation.

10. The method of claim 9, further comprising storing the watered cut flowers at room temperature or refrigeration for a predetermined period of time.
